# EUROPÄISCHE PATENTSCHRIFT

(11) **EP 2 033 728 B1**
(45) Veröffentlichungstag und Bekanntmachung des Hinweises auf die Patenterteilung: **07.01.2015**
(21) Anmeldenummer: 08013049.5
(22) Anmeldetag: 19.07.2008
(51) Int. Cl.: B23Q 17/09, B23Q 17/22, B23P 11/02

(54) **Einrichtung zum Einstellen und Befestigen eines Werkzeuges in einer Aufnahme eines Werkzeugfutters, insbesondere durch Schrumpfbefestigung**
Device for adjusting and fixing a tool in a holding portion of a tool chuck, in particular by shrink-fitting
Dispositif de réglage et de fixation d'un outil dans la réception d'un mandrin de serrage, en particulier par l'intermédiaire d'un serrage par frettage

(30) Priorität: 08.09.2007 DE 102007042915
(43) Veröffentlichungstag der Anmeldung: 11.03.2009
(73) Patentinhaber: Bilz Werkzeugfabrik GmbH & Co. KG, 73760 Ostfildern (DE)
(72) Erfinder: Steudte, Rüdiger, 73770 Denkendorf (DE)
(74) Vertreter: Witte, Weller & Partner Patentanwälte mbB

(56) Entgegenhaltungen:
- DE-A1- 10 317 574
- FR-A1- 2 838 072

## Beschreibung

Die Erfindung betrifft eine Einrichtung zum Einstellen und Befestigen eines Werkzeuges in einer Aufnahme eines Werkzeugfutters durch Schrumpfbefestigung, mit einem axial verstellbaren Positionierelement zur Vorgabe der axialen Einstecktiefe des Werkzeugschaftes in der Aufnahme des Werkzeugfutters, wobei in einem Grundkörper eine Aufnahmeeinrichtung auswechselbar aufnehmbar ist, die Trägerin des Positionierelements und eines Einstell- und Halteelements für dieses ist.

Eine derartige Einrichtung ist aus DE 103 17 574 A1 bekannt. Die hierbei verwendete Aufnahmerichtung in Gestalt eines Kupplungsadapters ist dazu geeignet, einen angepassten Werkzeughalter aufzunehmen. Für die Voreinstellung ist ein abweichendes Bauelement in Form eines Schafthalters erforderlich. Der Schafthalter wird mittels eines Anschlagdorns positioniert, wozu am Kupplungsadapter ein Gewinde vorgesehen ist, in das der Anschlagdorn einschraubbar ist.

Die Voreinstellung einer derartigen Einrichtung auf verschiedene Werkzeugfutter ist relativ aufwendig und kompliziert.

Vor diesem Hintergrund liegt der Erfindung die Aufgabe zugrunde, eine Einrichtung zum Einstellen und Befestigen eines Werkzeugs in einer Aufnahme eines Werkzeugfutters durch Schrumpfbefestigung der eingangs genannten Art derart zu verbessern, dass sich ein einfacher Aufbau ergibt, der möglichst betriebssicher und kostengünstig ist und es ermöglicht, mit einer einmal vorgenommenen Einstellung beliebig viele Werkzeugfutter mit identischen Voreinstellwerten zum Einschrumpfen von Werkzeugen in diese zu bedienen.

Diese Aufgabe wird durch eine Einrichtung gemäß Anspruch 1 gelöst.

Die erfindungsgemäße Einrichtung weist eine Schnittstellenaufnahme für ein darin aufnehmbares Voreinstellelement bzw. Werkzeugfutter auf, was es erlaubt, sowohl ein Werkzeugfutter als auch ein angepasstes Voreinstellelement aufzunehmen. Ein zusätzliches Element für die Voreinstellung ist somit nicht erforderlich. Aufgrund der auswechselbaren Aufnahme der Aufnahmeeinrichtung im Grundkörper kann die Aufnahmeeinrichtung nach Voreinstellung der axialen Einstecktiefe des Werkzeugs mit enthaltenem voreingestelltem Positionierelement aus dem Grundkörper entnommen und zum Einschrumpfen in ein Schrumpfgerät eingesetzt werden, in dem zugleich nach Einschrumpfen die Abkühlung erfolgt. Nach Abkühlung und Entnahme des Werkzeugfutters mit eingeschrumpftem Werkzeug können in die gleiche Aufnahmeeinrichtung mit eingestelltem Positionierelement beliebig viele weitere Werkzeugfutter mit identischen Voreinstellwerten zum Einschrumpfen von Werkzeugen eingesetzt werden.

Gegenstand der Erfindung ist ferner ein Verfahren zum Einstellen und Befestigen eines Werkzeugs in eine Aufnahme eines Werkzeugfutters durch Schrumpfbefestigung, bei dem die axiale Einstecktiefe des Werkzeugschaftes in der Aufnahme des Werkzeugfutters durch die Einstellung mittels eines Positionierelementes vorgegeben wird, gemäß den Merkmalen des Anspruchs 18. Das erfindungsgemäße Verfahren ermöglicht in einfacher und reproduzierbarer Weise eine genaue Werkzeugvoreinstellung.

Weitere Merkmale der Erfindung sind in den abhängigen Ansprüchen unter Schutz gestellt.

Weitere Einzelheiten und Vorteile der Erfindung ergeben sich aus der nachfolgenden Beschreibung eines bevorzugten Ausführungsbeispiels unter Bezugnahme auf die Zeichnung. Es zeigen:
- Fig. 1: einen schematischen axialen Längsschnitt einer Einrichtung zum Einstellen und Befestigen eines Werkzeuges in einer Aufnahme eines Werkzeugfutters, in der Phase der Voreinstellung der axialen Einstecktiefe des Werkzeugschaftes,

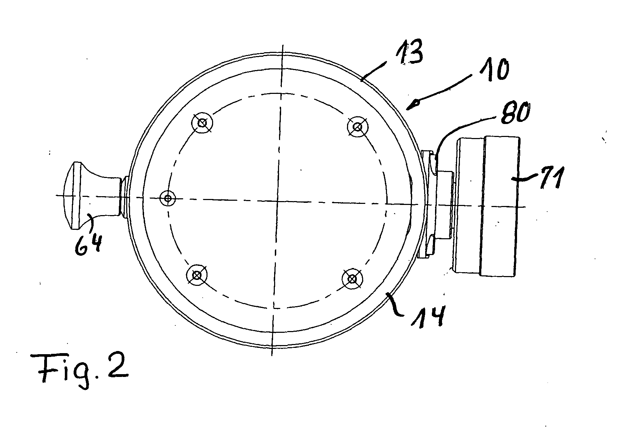

- Fig. 2: eine Unteransicht in Pfeilrichtung II in Figur 1.

In den Zeichnungen ist eine Einrichtung 10 gezeigt, die zum Einstellen und Befestigen eines Werkzeuges 11 in einer Aufnahme eines Werkzeugfutters, insbesondere durch Schrumpfbefestigung, ausgebildet ist. Diese Befestigung, insbesondere Schrumpfbefestigung, geschieht in einem hier nicht weiter gezeigten Schrumpfgerät üblicher und bekannter Bauart, nachdem die Einstecktiefe des Werkzeugschaftes 12 des Werkzeuges 11 in der Aufnahme des zur Schrumpfbefestigung geeigneten Werkzeugfutters mittels der Einrichtung 10 eingestellt und auf das nicht gezeigte Schrumpfgerät übertragen wurde. Da die Werkzeugfutter für die Schrumpfbefestigung mit solchen Aufnahmen für das Werkzeug 11 versehen sind, deren Durchmesser bei Raumtemperatur kleiner als derjenige des Werkzeugschaftes 12 ist, werden für die Positionierung als Voreinstellhilfen dienende Einrichtungen 10 verwendet. In derartige Voreinstellhilfen können die Werkzeuge 11 mit ihrem Schaft 12 bei Raumtemperatur eingesetzt und darin axial verschoben werden, um die Werkzeuge 11 auf diese Weise auf ein definiertes Maß in Bezug auf eine Referenzfläche ausrichten zu können. Dieser Sachverhalt ist generell bekannt (DE 10 2004 027 559 A1).

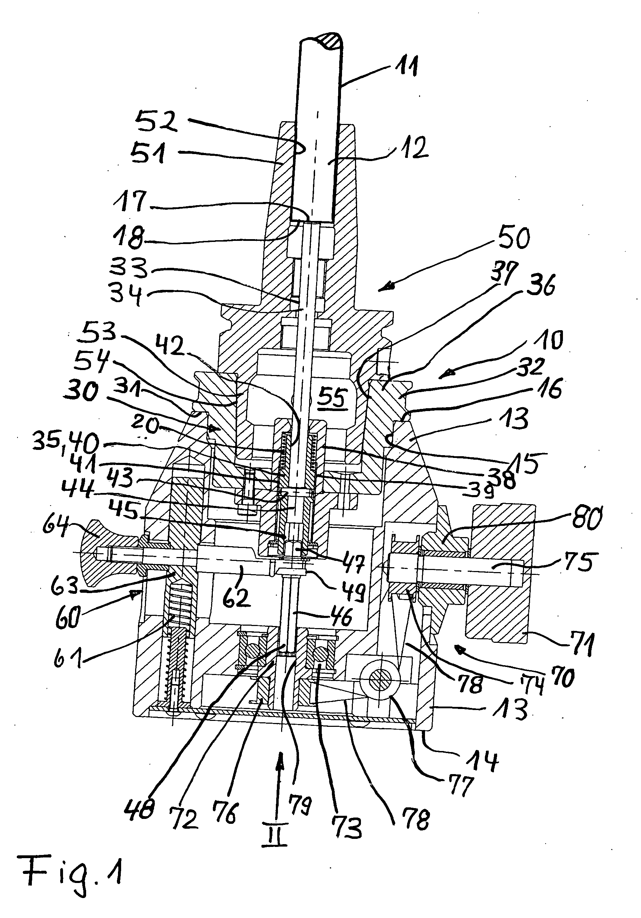

Die in den Zeichnungen gezeigte Einrichtung 10 weist einen Grundkörper 13 mit unterer Standfläche 14 auf, der darüber auf einem Arbeitstisch abgestellt werden kann. Der Grundkörper 13 hat am der Standfläche 14 gegenüberliegenden Ende eine Öffnung 15 mit oberseitiger Stirnfläche 16. Im Grundkörper 13 ist eine Aufnahmeeinrichtung 30 auswechselbar aufnehmbar, die in reproduzierbarer Position in die Öffnung 15 eingesetzt werden kann, wobei sie mit einer der Stirnfläche 16 zugewandten Fläche 31 eines Flansches 32 auf der Stirnfläche 16 aufsitzt. Die Aufnahmeeinrichtung 30 ist Trägerin eines axial verstellbaren Positionierelements 33, das z. B. aus einem vertikalen Stößel 34 gebildet ist. Das Positionierelement 33 dient der Einstellung und Vorgabe der axialen Einstecktiefe des Werkzeugschaftes 12. In der Aufnahmeeinrichtung 30 ist ferner ein Einstell- und Halteelement 35 für das Positionierelement 33 angeordnet. Die Aufnahmeeinrichtung 30 weist eine Schnittstellenaufnahme 36 für ein darin aufnehmbares, in Figur 1 gezeigtes Voreinstellelement 50 bzw. für ein nicht gezeigtes Werkzeugfutter auf.

Das Voreinstellelement 50 hat einen Werkzeugaufnahmebereich 51 mit Werkzeugaufnahmeöffnung 52 darin, die derart gestaltet ist, dass das Werkzeug 11 bei Raumtemperatur mit seinem Schaft 12 unmittelbar oder über eine zur Aufnahme des Werkzeuges 11 angepaßte Zwischenaufnahme, z. B. eine zwischengeschaltete Reduzierhülse, nahezu spielfrei in die Werkzeugaufnahmeöffnung 52 einsetzbar bzw. daraus entnehmbar ist. Das Voreinstellelement 50 weist ferner einen Verbindungsschaft 53 auf, der derart gestaltet ist, dass das Voreinstellelement 50 mit diesem Verbindungsschaft 53 gleitend und nahezu spielfrei in die Schnittstellenaufnahme 36 der Aufnahmeeinrichtung 30 einsetzbar bzw. daraus entnehmbar ist. In entsprechender Weise weist ein nicht gezeigtes Werkzeugfutter ebenfalls einen derartigen Verbindungsschaft auf, mit dem dieses Werkzeugfutter im Austausch gegen das Voreinstellelement 50 gleitend und nahezu spielfrei in die Schnittstellenaufnahme 36 einsetzbar bzw. daraus entnehmbar ist. Der Verbindungsschaft des Werkzeugsfutter ist dem Verbindungsschaft 53 des Voreinstellelements 50 entsprechend bemessen. Der jeweilige Verbindungsschaft weist eine Außenfläche 54 auf, die beim gezeigten Ausführungsbeispiel kegelstumpfförmig geformt ist, statt dessen aber auch zylindrisch oder in anderer Weise geformt sein kann. In Anpassung daran weist die Schnittstellenaufnahme 36 eine Bohrung 37 auf, die in Anpassung an die Außenfläche 54 des jeweiligen Verbindungsschaftes 53 beim gezeigten Ausführungsbeispiel ebenfalls kegelstumpfförmig ist, bei anderen Ausführungsbeispielen statt dessen aber zylindrisch oder in sonstiger Weise geformt sein kann. Von Vorteil kann es sein, wenn diese Bohrung 37 sowie die Außenfläche 54 des jeweiligen Verbindungsschaftes 53 als Steilkegel, z. B. als HSK-Kurzkegel, ausgebildet sind.

Es versteht sich, dass das nicht gezeigte Werkzeugfutter einen Werkzeugaufnahmebereich analog dem Werkzeugaufnahmebereich 51 des Voreinstellelements 50 mit einer Werkzeugaufnahmeöffnung darin aufweist, die derart gestaltet ist, dass das Werkzeug 11 mit seinem Schaft 12 bei Raumtemperatur nicht darin eingesetzt werden kann, jedoch bei Erhitzung hineinpasst.

Das Voreinstellelement 50 bzw. das Werkzeugfutter weist jeweils einen zentralen axialen Durchlaß 55 auf, der zur Aufnahmeeinrichtung 30 hin sowie zu der jeweiligen Werkzeugaufnahmeöffnung 52 hin offen ist und der von dem in der Aufnahmeeinrichtung 30 gehaltenen Positionierelement 33 koaxial durchsetzbar ist. Das Positionierelement 33 ist im Zentrum der Aufnahmeeinrichtung 30 axial zentriert und geführt. Die Aufnahmeeinrichtung 30 enthält z. B. in einer zentralen Hülse 38 eine zentrale Gewindebohrung 39. Im Inneren der Hülse 38 ist als Einstell- und Halteelement 35 eine Stellhülse 40 aufgenommen, die sich über einen wesentlichen Längenbereich der Hülse 38 erstreckt und ein Außengewinde 41 aufweist, mit dem die Stellhülse 40 in die Gewindebohrung 39 eingeschraubt ist. Die Stellhülse 40 ist mit einer entgegen der Einschraubrichtung wirkenden Federkraft beaufschlagt, die von einer Feder 20 erzeugt wird, die einerseits am oberen Ende der Hülse 38 und andererseits an dem Absatz der Stellhülse 40 abgestützt ist, der das Außengewinde 41 trägt. Die Feder 20 gleicht das Spiel des Gewindes 39, 41 aus. Durch Drehbetätigung der Stellhülse 40 kann diese über die Gewindebohrung 39 und das Außengewinde 41 innerhalb der Hülse 38 axial verstellt werden. Die Stellhülse 40 enthält eine axial durchgehende Bohrung 42 etwa gleichen Durchmessers wie das Positionierelement 33. Das Positionierelement 33 ist mittels der Stellhülse 40 gehalten, und zwar in der Weise, dass das Positionierelement 33 in die Stellhülse 40 in deren Bohrung 42 eingesteckt ist und auf diese Weise in der Stellhülse 40 zentriert ist. Mit dem in Fig. 1 unteren Ende ist das Positionierelement 33 axial in Bezug auf die Stellhülse 40 abgestützt, z. B. mittels eines Querstiftes 43 der Stellhülse 40, auf dem das Positionierelement 33 aufsitzt.

Das Einstell- und Halteelement 35 in Form der Stellhülse 40 ist relativ zur Aufnahmeeinrichtung 30 drehverstellbar und innerhalb der Hülse 38 axial einstellbar. Auf diese Weise ist das endseitig auf dem Querstift 43 aufsitzende Positionierelement 33 zur Vorgabe der axialen Einstecktiefe des Werkzeugschaftes 12 einstellbar.

Die Drehverstellung der Stellhülse 40 ist in einfacher Weise vom Äußeren des Grundkörpers 13 her möglich mittels einer Antriebseinrichtung 70, die ein äußeres Stellelement 71, z. B. Handrad, aufweist, das getrieblich mit einer Antriebshülse 72 gekoppelt ist. Die Antriebshülse 72 ist mittels eines Lagers 73 im Grundkörper 13 drehbar gelagert. Als getriebliche Mittel dienen z. B. eine Riemenscheibe 74 auf einer Welle 75 des Stellelements 71, ferner eine Riemenscheibe 76 auf der Antriebshülse 72 und ein Umlenkrad 77, über die ein nur schematisch angedeuteter Zahnriemen 78 zur getrieblichen Kopplung gelegt ist. Eine Drehbetätigung des Stellelements 71 hat somit eine entsprechende Drehverstellung der Antriebshülse 72 zur Folge.

Das Einstell- und Halteelement 35, insbesondere in Form der Stellhülse 40, weist einen offenen Kanal 44 mit unterem Drehangriff 45 auf, in den zum Zwecke der Drehverstellung ein Verstellglied 46 mit einem passenden Drehmittel 47 eingreifen kann. Der Drehangriff 45 am Ende des Kanals 44 kann z. B. aus einem Vieleckprofil, z. B. Innensechskantprofil, gebildet sein. Das passende Drehmittel 47 des Verstellgliedes 46 kann dann in Anpassung daran als zumindest endseitiges Vieleckprofil, z. B. Außensechskantprofil, ausgebildet sein. Beim gezeigten Ausführungsbeispiel ist das Verstellglied 46 ein etwa stiftförmiges Element mit Drehmittel 48 am in Fig. 1 unteren Ende, wobei dieses Drehmittel 48 formschlüssig eingreift in einen in der Antriebshülse 72 ausgebildeten entsprechenden Drehangriff 79. Die Antriebshülse 72 kann ein axial durchgehenden Vieleckprofil, z. B. Innensechskantprofil, analog dem Drehangriff 45 der Stellhülse 40 aufweisen, wobei das Verstellglied 46 als Stift mit axial zumindest im wesentlichen durchgehenden Vieleckprofil, z. B. Außensechskantprofil, ausgebildet sein kann. Aufgrund des Drehangriffes 79 und Drehmittels 48 ist das Verstellglied 46 von Außen über die Antriebseinrichtung 70 drehverstellbar, wobei diese Drehverstellung mittels des Drehmittels 47 und des Drehangriffs 45 auf die Stellhülse 40 übertragen wird. Das äußere Stellelement 71 und die übrigen Elemente der Antriebseinrichtung 70 sowie das Verstellglied 46 sind im Grundkörper 13 angeordnet. Das Stellelement 71 sitzt an einem Halter 80, der am Grundkörper 13 verschiebbar und klemmbar angreift.

Das Verstellglied 46 ist bei Bedarf mit dem Drehmittel 47 in Eingriff bzw. außer Eingriff mit dem Drehangriff 45 der Stellhülse 40 bringbar. Hierzu ist im Grundkörper 13 eine von außen betätigbare, am Verstellglied 46 zu dessen Positionierung in Bezug auf das Einstell- und Halteelement 35, insbesondere die Stellhülse 40, angreifende Betätigungseinrichtung 60 angeordnet, mittels der das Verstellglied 46 axial in Eingriff mit der Stellhülse 40 bzw. gegensinnig dazu außer Eingriff mit dieser bringbar ist. Diese Betätigungseinrichtung 60 ist in Eingriffsrichtung, d.h. in Fig. 1 nach oben, mittels einer Feder 61 federelastisch vorgespannt und gehalten. Die Betätigungseinrichtung 60 weist einen quer gerichteten Halter 62 auf, der mit dem Verstellglied 46 zu dessen Axialbewegung gekoppelt ist, wobei das Verstellglied 46 relativ zum Halter 62 drehbar ist. Hierzu greift der Halter 62 z. B. mit einer Gabel von der Seite her am Verstellglied 46 an, wobei auf beiden Axialseiten dieser Gabel axiale Anschläge am Verstellglied 46 vorgesehen sind, von denen ein Anschlag 49 sichtbar ist. Der Halter 62 ist einerseits am Verstellglied 46 und andererseits in Querabstand davon an einem etwa achsparallelen Führungsbolzen 63 gehalten, der verschiebbar im Grundkörper 13 aufgenommen ist. Auf den Führungsbolzen 63 wirkt die Feder 61 in Form einer Druckfeder etwa achsparallel in Fig. 1 nach oben, wodurch der Halter 62 und über diesen das Drehmittel 47 in Eingriff mit dem Drehangriff 45 der Stellhülse 40 gehalten ist. Am Halter 62 greift außerhalb des Grundkörpers 13 eine betätigbare Handhabe 64 an, die in vertikaler Richtung relativ zum Grundkörper 13 mit dem Führungsbolzen 63 und dem Halter 62 verschiebbar ist. Durch Verschiebung in Fig. 1 nach unten gelangt das Drehmittel 47 außer Eingriff mit dem Drehangriff 45, so dass keine Drehverstellung des Einstell- und Halteelements 35, insbesondere der Stellhülse 40, möglich ist. Man erkennt, dass nach Einsetzen der Aufnahmeeinrichtung 30 in den Grundkörper 13 und nach Einsetzen eines Voreinstellelements 50 in die Aufnahmeeinrichtung 30 das in letzterer angeordnete Positionierelement 33 durch den Durchlaß 55 in die Werkzeugaufnahmeöffnung 52 des Voreinstellelements 50 hineinragt, wobei das Voreinstellelement 50 in der Aufnahmeeinrichtung 30 in Folge Gewichtskraft in der axialen Einsetzposition gehalten ist, die in Fig. 1 dargestellt ist. Das eingesetzte Voreinstellelement 50 ist so ausgewählt, dass dessen Werkzeugaufnahmeöffnung 52 an den Durchmesser des Werkzeugschaftes 12 angepaßt ist. Für ein anderes Werkzeug 11 mit größerem oder kleinerem Werkzeugschaft 12 bedarf es eines entsprechenden anderen Voreinstellelements 50 oder es wird mit Reduzierhülsen gearbeitet, die in die Werkzeugaufnahmeöffnung 52 des Voreinstellelements 50 passen und hinsichtlich ihres Innendurchmessers an die unterschiedlichen Schaftdurchmesser des Werkzeuges 11 angepaßt sind.

Bei einem nicht weiter gezeigten Ausführungsbeispiel sind vorzugsweise äußere lösbare Befestigungsmittel vorgesehen, die am Voreinstellelement 50 und/oder an der Aufnahmeeinrichtung 30 angreifen und diese in Bezug auf den Grundkörper 13 axial festlegen. Auf derartige äußere Befestigungsmittel kann verzichtet werden, wenn das Voreinstellelement 50 in der Aufnahmeeinrichtung 30 in der axialen Einsetzposition allein durch Gewichtskraft gehalten ist oder wenn dies über eine zusätzliche Beschwerung des Voreinstellelements 50 geschieht, z. B. über aufgesetzte Ringe oder dergleichen.

Die Einrichtung 10 eröffnet vielfältige Arbeitsweisen. Eine Arbeitsweise sieht wie folgt aus. Das Voreinstellelement 50 und das in das nicht gezeigte Schrumpfgerät einsetzbare, nicht gezeigte Werkzeugfutter sind baugleich gestaltet. Sie unterscheiden sich lediglich durch die Größe, insbesondere den Durchmesser, der Werkzeugaufnahmeöffnung 52, dergestalt, dass diese bei dem gezeigten Voreinstellelement 50 größer als bei dem nicht gezeigten Werkzeugfutter und so ausgebildet ist, dass das Werkzeug 11 bei Raumtemperatur mit seinem Schaft 12 unmittelbar oder über nicht gezeigte Reduzierhülsen nahezu spielfrei hineinpasst, während bei dem nicht gezeigten Werkzeugfutter, in das das Einschrumpfen des Werkzeuges 11 geschieht, dessen Werkzeugaufnahmeöffnung kleiner und so ausgebildet ist, dass das Werkzeug 11 bei Raumtemperatur mit seinem Schaft 12 nicht darin eingesetzt werden kann, sondern erst nach Erhitzen dieses nicht gezeigten Werkzeugfutters hineinpasst.

Bei einer anderen Arbeitsweise wird als Voreinstellelement 50 nicht ein solches gemäß Fig. 1 verwendet sondern ein solches Werkzeugfutter, das sowohl zur Voreinstellung als auch zur Werkzeugbefestigung, insbesondere Schrumpfbefestigung, dient. Auch ist es möglich, statt des beschriebenen Voreinstellelements 50 ein solches Werkzeugfutter in die Aufnahmeeinrichtung 30 einzusetzen, dessen Werkzeugaufnahmebereich mit einer konischen Werkzeugaufnahmeöffnung zur Aufnahme eines Einsatzes darin versehen ist, wobei der Einsatz eine zylindrische Innenbohrung zur Aufnahme des Werkzeuges mit seinem Schaft sowohl bei Raumtemperatur zur Voreinstellung als auch zur Befestigung aufweist. Der Einsatz hat eine konische Außenfläche zur passenden Aufnahme in der konischen Werkzeugaufnahmeöffnung eines solchen Werkzeugfutters und mehrere in Umfangsrichtung in Abständen voneinander angeordnete Längsschlitze. Ein derartiges Werkzeugfutter ergibt sich z. B. aus EP 1 541 265 A2. Auch ein solches kann statt des Voreinstellelements 50 in die Aufnahmeeinrichtung 30 eingesetzt werden.

Die Erfindung bezieht sich ferner auf ein Verfahren zum Einstellen und Befestigen eines Werkzeuges 11 in einer Aufnahme eines Werkzeugfutters, insbesondere durch Schrumpfbefestigung, bei der die axiale Einstecktiefe des Werkzeugschaftes 12 in der Aufnahme des Werkzeugfutters durch die Einstellung mittels des Positionierelementes 33 vorgegeben wird. Bei diesem Verfahren wird wie folgt vorgegangen. Das Voreinstellelement 50 wird mit seinem passenden Verbindungsschaft 53 in die dafür passende Schnittstellenaufnahme 36 der Aufnahmeeinrichtung 30 eingesetzt. In die Werkzeugaufnahmeöffnung 52 im Werkzeugaufnahmebereich 51 wird ein Werkzeug 11 mit seinem Schaft 12 von oben her eingesetzt. Die Aufnahmeeinrichtung 30 wird in die Öffnung 15 des Grundkörpers 13 eingesetzt, bis die Aufnahmeeinrichtung 30 mit der Fläche 31 auf der Stirnfläche 16 aufsitzt. Beim Einsetzen des Voreinstellelements 50 in die Aufnahmeeinrichtung 30 durchgreift das Positionierelement 33 den Durchlaß 55 und ragt in die Werkzeugaufnahmeöffnung 52 hinein, wobei dort eine endseitige Antastfläche 17 am in Fig. 1 oberen Ende des Positionierelements 33 mit einer daran angepassten Endfläche 18 des Werkzeugschaftes 12 in Anlageberührung gelangt. Das Werkzeug 11 ruht mit seinem Schaft 12 auf der Antastfläche 17 des Positionierelements 33. Mit Hilfe einer üblichen Messeinrichtung mit Auswerteeinrichtung kann dann zunächst die Messeinrichtung auf ein Bezugsmaß, z. B. eine Anlagefläche des Grundkörpers 13, genullt werden. Sodann wird das Werkzeug 11 mittels des Positionierelements 33 auf Sollposition eingestellt. Hierzu wird das Einstell- und Halteelement 35 des Positionierelements 33 in der Aufnahmeeinrichtung 30 mittels der Antriebseinrichtung 70 derart betätigt, dass das Positionierelement 33 das Ende des Werkzeugschaftes 12 antastet und das Werkzeug 11 soweit axial verschiebt, bis dieses mit seinem in Fig. 1 nicht gezeigten freien Ende, insbesondere der dortigen Spitze, Schneide od. dgl., eine vorgegebene Sollposition erreicht hat, wobei die Einstellung mittels einer Höhenmesseinrichtung, z. B. einer Messkamera, einem Profilprojektor, einem Höhenreißer od. dgl., vorzugsweise mit Höhenverstellbarkeit, in Bezug auf die Referenzverkörperung, z. B. Referenzfläche am Grundkörper 13, vorgenommen wird. Derartige Einstellvorgänge erfolgen in bekannter üblicher Weise (DE 203 21 113 U1). Nachdem das Werkzeug 11 mittels der Aufnahmeeinrichtung 30 und des Positionierelements 33 dieser auf Solllänge eingestellt worden ist, werden das Werkzeug 11 und das Voreinstellelement 50 aus der Aufnahmeeinrichtung 30 entnommen, während das Positionierelement 33 in der eingestellten Sollposition darin verbleibt. Um hierbei ungewünschte Verfälschungen durch Drehungen des Einstell- und Halteelements 35, insbesondere der Stellhülse 40, zu verhindern, wird vor der Entnahme des Voreinstellelements 50 aus der Aufnahmeeinrichtung 30 deren Stellhülse 40 abgekoppelt von der Antriebseinrichtung 70 mit Verstellglied 46 unter Aufhebung der Verstellmöglichkeit des Einstell- und Halteelements 35. Dies geschieht in der Weise, dass der Halter 62 gegen die Wirkung der Feder 61 in Fig. 1 nach unten gedrückt wird und dabei das Verstellglied 46 axial zumindest soweit mitnimmt, dass dessen Drehmittel 47 außer Eingriff mit dem Drehangriff 45 am unteren Ende der Stellhülse 40 gelangt.

Nachdem die Aufnahmeeinrichtung 30 mit eingestelltem Positionierelement 33 aus dem Grundkörper 13 entnommen worden ist, kann die Aufnahmeeinrichtung 30 in ein nicht dargestelltes Schrumpfgerät, z. B. in deren zur Aufnahme ausgebildeten Zentrierring, eingesetzt werden. Das Schrumpfgerät kann am Arbeitsplatz neben der Einrichtung 10 stehen oder es befindet sich räumlich weiter entfernt davon. In die Schnittstellenaufnahme 36 der Aufnahmeeinrichtung 30 kann dann ein Werkzeugfutter mit einem Verbindungsschaft, der in die Schnittstellenaufnahme 36 paßt, eingesetzt werden, wobei dieses Futter so, wie auch das Voreinstellelement 50, von dem in Sollposition gehaltenen Positionierelement 33 durchsetzt wird, welches durch den Verbindungsschaft hindurch bis in die Werkzeugaufnahme hinein vorsteht. Nach Einsetzen des zum Schrumpfen geeigneten Werkzeugfutters wird dieses zumindest im Bereich des Werkzeugaufnahmebereichs nach üblichen Methoden erhitzt, derart, dass die Werkzeugaufnahmeöffnung des Futters durch Wärmedehnung soweit vergrößert wird, dass das eingesteckte Werkzeug 11 mit seinem Schaft 12 unmittelbar in die Werkzeugaufnahmeöffnung des Futters hineinpasst und soweit eingesetzt wird, bis der Werkzeugschaft 12 endseitig axial am Positionierelement 33 aufsitzt. Im Schrumpfgerät wird dann die Aufnahmeeinrichtung 30 mit enthaltenem Werkzeugfutter und mit in dieses Werkzeugfutter eingeschrumpftem Werkzeug 11 abgekühlt z. B. mit Gas, z. B. Luft, oder durch Eintauchen in ein Kühlmedium, z. B. Wasser, oder durch Bespritzen mit Kühlmedium oder mittels dergleichen Kühleinrichtung. Danach wird das abgekühlte Werkzeugfutter mit eingestelltem und eingeschrumpftem Werkzeug 11 aus der Schnittstellenaufnahme 36 der Aufnahmeeinrichtung 30 entnommen.

Die diese Vorgehensweise ermöglichende Einrichtung 10 hat vielfältige Vorteile. Sie ist einfach im Aufbau, betriebssicher und kostengünstig. Sie kann bei jedem Schrumpfgerät verwendet werden. Die Einrichtung 10 ermöglicht es, dass Werkzeuge 11 direkt in der Nachbarschaft vom Schrumpfgerät voreingestellt werden können und anschließend im Schrumpfgerät eingeschrumpft und hiernach gekühlt werden können. Zumindest das Werkzeugfutter kann im Verbindungsschaft ein koaxiales Kühlmittelrohr aufweisen. Da das Werkzeugfutter in der Aufnahmeeinrichtung 30 sitzend geschrumpft und direkt nachfolgend, ohne weiteres Handling, abgekühlt wird, sind Verletzungsgefahren durch Verbrennungen für die Bedienungsperson ausgeschlossen. Der Transport der Werkzeuge zu anderen Voreinstellgeräten entfällt. Die Werkzeuge können zentral und kostengünstig voreingestellt werden. Von Vorteil ist ferner, dass eine etwaige Voreinstellschraube im Schrumpffutter entbehrlich ist. Da die Aufnahmeeinrichtung 30 mit enthaltenem voreingestellten Positionierelement 33 aus dem Grundkörper 13 entnehmbar und zum Einschrumpfen in ein Schrumpfgerät einsetzbar ist, können mit Hilfe einer einmal eingestellten Aufnahmeeinrichtung 30 beliebig viele Werkzeugfutter mit identischen Voreinstellwerten zum Einschrumpfen von Werkzeugen in diese bedient werden.

## Patentansprüche

1. Einrichtung zum Einstellen und Befestigen eines Werkzeuges (11) in einer Aufnahme eines Werkzeugfutters durch Schrumpfbefestigung, mit einem axial verstellbaren Positionierelement (33) zur Vorgabe der axialen Einstecktiefe des Werkzeugschaftes (12) in der Aufnahme des Werkzeugfutters, wobei in einem Grundkörper (13) eine Aufnahmeeinrichtung (30) auswechselbar aufnehmbar ist, die Trägerin des Positionierelements (33) und eines Einstell- und Halteelements (35) für dieses ist,
**dadurch gekennzeichnet,**
**dass** die Aufnahmeeinrichtung (30) eine Schnittstellenaufnahme (36) für ein darin aufnehmbares Voreinstellelement (50) bzw. Werkzeugfutter aufweist, und dass die Aufnahmeeinrichtung (36) eine zentrale Hülse (38) aufweist mit einer zentralen Gewindebohrung (39) darin, in die als Einstell- und Halteelement (35) eine Stellhülse (40) mit Außengewinde (41) eingeschraubt ist, in die das Positionierelement (33) eingesteckt ist, das in dieser zentriert und axial abgestützt ist, und dass die Stellhülse (40) einen axial offenen Kanal (44) mit Drehangriff (45) aufweist, in den zum Zwecke der Drehverstellung ein Verstellglied (46) mit einem passenden Drehmittel (47) eingreifen kann, wobei das Verstellglied (46) an dem dem Einstell- und Halteelement (35) abgewandten Endbereich mittels dort angreifender Antriebseinrichtung (70) drehbetätigbar ist.

2. Einrichtung nach Anspruch 1,
**dadurch gekennzeichnet,**
**dass** das Voreinstellelement (50) einen Werkzeugaufnahmebereich (51) mit einer Werkzeugaufnahmeöffnung (52) aufweist, die derart gestaltet ist, dass
das Werkzeug (11) bei Raumtemperatur mit seinem Schaft (12) unmittelbar oder über eine zur Aufnahme des Werkzeuges (11) angepaßte Zwischenaufnahme, z.B. eine zwischengeschaltete Reduzierhülse, nahezu spielfrei in die Werkzeugaufnahmeöffnung (52) einsetzbar bzw. daraus entnehmbar ist.

3. Einrichtung nach Anspruch 1 oder 2,
**dadurch gekennzeichnet,**
**dass** das Voreinstellelement (50) einen Verbindungsschaft (53) aufweist, der derart gestaltet ist, dass das Voreinstellelement (50) mit seinem Verbindungsschaft (53) gleitend und nahezu spielfrei in die Schnittstellenaufnahme (36) einsetzbar bzw. daraus entnehmbar ist.

4. Einrichtung nach einem der Ansprüche 1 bis 3,
**dadurch gekennzeichnet,**
**dass** das Werkzeugfutter einen Verbindungsschaft aufweist, mit dem das Werkzeugfutter im Austausch gegen das Voreinstellelement (50) gleitend und nahezu spielfrei in die Schnittstellenaufnahme (36) einsetzbar bzw. daraus entnehmbar ist, und der dem Verbindunqsschaft (53) des Voreinstellelements (50) entsprechend bemessen ist.

5. Einrichtung nach einem der Ansprüche 3 oder 4,
**dadurch gekennzeichnet,**
**dass** die Schnittstellenaufnahme (36) eine Bohrung (37) aufweist, die in Anpassung an die Außenfläche (54) des jeweiligen zylindrisch, kegelstumpfförmig od.dgl. geformten Verbindungsschaftes (53) zylindrisch, kegelstumpfförmig od.dgl. geformt ist, oder dass die Bohrung (37) sowie die Außenfläche (54) des jeweiligen Verbindungsschaftes (53) als Steilkegel ausgebildet sind.

6. Einrichtung nach einem der Ansprüche 1 bis 5,
**dadurch gekennzeichnet,**
**dass** das Werkzeugfutter einen Werkzeugaufnahmebereich analog demjenigen (51) des Voreinstellelements (50) mit einer Werkzeugaufnahmeöffnung darin aufweist, die derart gestaltet ist, dass das Werkzeug (11) mit seinem Schaft (12) bei Raumtemperatur nicht darin eingesetzt werden kann, jedoch bei Erhitzung hineinpasst.

7. Einrichtung nach einem der Ansprüche 1 bis 6,
**dadurch gekennzeichnet,**
**dass** das Voreinstellelement (50) bzw. das Werkzeugfutter jeweils einen zentralen axialen Durchlass (55) aufweist, der zur Aufnahmeeinrichtung (30) hin sowie zu der jeweiligen Werkzeugaufnahmeöffnung (52) hin offen ist und vom axialen Positionierelement (33) der Aufnahmeeinrichtung (30) koaxial durchsetzbar ist.

8. Einrichtung nach einem der Ansprüche 1 bis 7,
**dadurch gekennzeichnet,**
**dass** das Positionierelement (33) in der Aufnahmeeinrichtung (30) mit dem dortigen Einstell- und Halteelement (35) derart verbunden ist, dass das Positionierelement (33) hinsichtlich seiner axialen Position relativ zur Aufnahmeeinrichtung (30) einstellbar und in der eingestellten Position halterbar ist, und vorzugsweise, dass das Einstell- und Halteelement (35) mittels eines Betätigers (71) von außen her betätigbar ist.

9. Einrichtung nach einem der Ansprüche 1 bis 8,
**dadurch gekennzeichnet**,

10. Einrichtung nach Anspruch 1,
**dadurch gekennzeichnet,**
**dass** die Antriebseinrichtung (70) eine mit dem Verstellglied (46) in Umfangsrichtung gekoppelte Antriebshülse (72) aufweist, in die das Verstellglied (46) axial relativ verschiebbar eintaucht, dass die Antriebseinrichtung (70) ein äußeres Stellelement (71) aufweist, das mit der Antriebshülse (72) zu deren Drehverstellung getrieblich gekoppelt ist.

11. Einrichtung nach Ansprüche 10,
**dadurch gekennzeichnet,**
**dass** das äußere Stellelement (71) und die übrigen Elemente der Antriebseinrichtung (70) und das Verstellglied (46) im Grundkörper (13) angeordnet sind und am Grundkörper (18) ein Halter (80) des Stellelements (71) achsparallel verschiebbar und klemmbar angreift.

12. Einrichtung nach einem der Ansprüche 9 bis 11,
**dadurch gekennzeichnet,**
**dass** im Grundkörper (13) eine von außen betätigbare, am Verstellglied (46) zu dessen Positionierung in Bezug auf das Einstell- und Halteelement (35) angreifende Betätigungseinrichtung (60) angeordnet ist, mittels der das Verstellglied (46) axial in Eingriff mit der Stellhülse (40) bzw. gegensinnig dazu außer Eingriff mit dieser bringbar ist, und vorzugsweise, dass die Betätigungseinrichtung (60) einen quer gerichteten Halter (62) aufweist, der mit dem Verstellglied (46) zu dessen Axialbewegung gekoppelt ist und in Eingriffsrichtung federelastisch (Feder 61) vorgespannt und gehalten ist.

13. Einrichtung nach Anspruch 12,
**dadurch gekennzeichnet,**
**dass** der Halter (62) am Verstellglied (46) und in Querabstand davon an einem etwa achsparallelen Führungsbolzen (63) gehalten ist, der im Grundkörper (13) verschiebbar gehalten ist und an dem außerhalb des Grundkörpers (13) eine betätigbare Handhabe (64) angreift.

14. Einrichtung nach einem der Ansprüche 1 bis 13,
**gekennzeichnet durch**
äußere lösbare Befestigungsmittel, die am Voreinstellelement (50) und/oder an der Aufnahmeeinrichtung (30) angreifen und diese in Bezug auf den Grundkörper (13) axial festlegen.

15. Einrichtung nach einem der Ansprüche 1 bis 14,
**dadurch gekennzeichnet,**
**dass** das Voreinstellelement (50) und das Werkzeugfutter baugleich gestaltet sind und sich lediglich durch die Grösse des Durchmessers der Werkzeugaufnahmeöffnung dergestalt voneinander unterscheiden, dass diese (52) bei dem Voreinstellelement (50) größer als bei dem Werkzeugfutter und so ausgebildet ist, dass das Werkzeug (11) bei Raumtemperatur mit seinem Schaft (12) unmittelbar oder über eine zwischengeschaltete Reduzierhülse nahezu spielfrei hineinpasst, während die Werkzeugaufnahmeöffnung des Werkzeugfutters kleiner und so ausgebildet ist, dass das Werkzeug (11) bei Raumtemperatur mit seinem Schaft (12) nicht darin eingesetzt werden kann, sondern erst nach Erhitzung des Werkzeugfutters hineinpasst.

16. Einrichtung nach einem oder mehreren der vorhergehenden Ansprüche,
**dadurch gekennzeichnet,**
**dass** zur Bildung des Voreinstellelements (50) ein solches Werkzeugfutter vorgesehen ist, das sowohl zur Voreinstellung als auch zur Werkzeugbefestigung durch Schrumpfbefestigung dient.

17. Einrichtung nach Anspruch 16,
**dadurch gekennzeichnet,**
**dass** das Werkzeugfutter einen Werkzeugaufnahmebereich mit einer konischen Werkzeugaufnahmeöffnung zur Aufnahme eines Einsatzes darin aufweist, der eine zylindrische Innenbohrung zur Aufnahme des Werkzeuges (11) mit seinem Schaft (12) sowohl bei Raumtemperatur zur Voreinstellung als auch zur Befestigung durch Schrumpfbefestigung, ferner eine konische Außenfläche zur passenden Aufnahme in der konischen Werkzeugaufnahmeöffnung und mehrere in Umfangsrichtung in Abständen voneinander angeordnete Längsschlitze aufweist.

18. Verfahren zum Einstellen und Befestigen eines Werkzeuges (11) in einer Aufnahme eines Werkzeugfutters durch Schrumpfbefestigung, bei dem die axiale Einstecktiefe des Werkzeugschaftes (12) in der Aufnahme des Werkzeugfutters durch die Einstellung mittels eines Positionierelementes (33) vorgegeben wird, mittels einer Einrichtung nach einem oder mehreren der vorhergehenden Ansprüche,
**dadurch gekennzeichnet,**
**dass** ein Voreinstellelement (50) mit einem passenden Verbindungsschaft (53) in eine dafür sowie für ein Werkzeugfutter passende Schnittstellenaufnahme (36) einer Aufnahmeeinrichtung (30) eingesetzt wird und in eine Werkzeugaufnahmeöffnung (52) innerhalb eines Werkzeugaufnahmebereichs (51) des Voreinstellelements (50) das Werkzeug (11) mit seinem Schaft (12) eingesetzt wird.

19. Verfahren nach Anspruch 18,
**dadurch gekennzeichnet,**
**dass** ein Einstell- und Halteelement (35) des Positionierelements (33) in der Aufnahmeeinrichtung (30) von außen her derart betätigt wird, dass das Positionierelement (33) das Schaftende des Werkzeuges (11) antastet und dieses soweit axial verschiebt, bis das Werkzeug (11) mit seinem freien Ende eine vorgegebene Sollposition erreicht hat, wobei die Einstellung mittels einer Höhenmesseinrichtung mit Höhenverstellbarkeit, in Bezug auf eine Referenzfläche am Grundkörper(13), vorgenommen wird.

20. Verfahren nach einem der Ansprüche 18 oder 19,
**dadurch gekennzeichnet,**
**dass** das Voreinstellelement (50) und das Werkzeug (11) aus der Aufnahmeeinrichtung (30) entnommen wird, während deren Positionierelement in der eingestellten Soll-Position gehalten bleibt.

21. Verfahren nach Anspruch 20,
**dadurch gekennzeichnet,**
**dass** vor der Entnahme des Voreinstellelements (50) aus der Aufnahmeeinrichtung (30) deren Einstell- und Halteelement (35) von einer damit koppelbaren Antriebseinrichtung (70) unter Aufhebung einer Verstellmöglichkeit durch diese abgekoppelt wird.

22. Verfahren nach einem der Ansprüche 18 bis 21,
**dadurch gekennzeichnet,**
**dass** die Aufnahmeeinrichtung (30) mit eingesetztem Werkzeugfutter in ein Schrumpfgerät eingesetzt wird.

23. Verfahren nach einem der Ansprüche 18 bis 22,
**dadurch gekennzeichnet,**
**dass** das Werkzeugfutter im Schrumpfgerät zumindest im Bereich des Werkzeugaufnahmebereichs erhitzt wird, derart, dass dessen Werkzeugaufnahmeöffnung durch Wärmedehnung soweit vergrößert wird, dass das Werkzeug (11) mit seinem Schaft (12) in die Werkzeugaufnahmeöffnung hineinpasst und es in diese eingesetzt wird, bis der Werkzeugschaft (12) endseitig axial am Positionierelement (33) aufsitzt.

24. Verfahren nach einem der Ansprüche 18 bis 23,
**dadurch gekennzeichnet,**
**dass** die Aufnahmeeinrichtung (30) mit enthaltenem Werkzeugfutter und in diesem enthaltenem Werkzeug (11) abkühlt bzw. abgekühlt wird, mit Gas, oder Luft, oder durch Eintauchen in ein Kühlmedium, wie Wasser, durch Bespritzen mit Kühlmedium oder mittels dergleichen Kühleinrichtung, und dass das abgekühlte Werkzeugfutter mit eingestelltem, eingeschrumpftem Werkzeug (11) aus der Schnittstellenaufnahme (36) der Aufnahmeeinrichtung (30) entnommen wird.

## Claims

1. Device for setting and fastening a tool (11) in a receptacle of a tool chuck by shrink-fit fastening, having an axially adjustable positioning element (33) for defining the axial insertion depth of the tool shank (12) in the receptacle of the tool chuck, wherein a receiving device (30) is receivable in an exchangeable manner in a basic body (13), said receiving device (30) being the carrier of the positioning element (33) and of a setting and holding element (35) for the latter,
**characterized**
**in that** the receiving device (30) has an interface receptacle (36) for a presetting element (50) or tool chuck that is receivable therein, and in that the receiving device (36) has a central sleeve (38) with a central threaded bore (39) into which an adjusting sleeve (40) having an external thread (41) is screwed as the setting and holding element (35), the positioning element (33) being inserted into said adjusting sleeve (40) and being centred and axially supported therein, and in that the adjusting sleeve (40) has an axially open channel (44) with rotational engagement (45) in which an adjustment member (46) having a matching rotation means (47) can engage for the purpose of rotational adjustment, wherein the adjustment member (46) is actuable in rotation in the end region remote from the setting and holding element (35) by means of a drive device (70) that acts thereon.

2. Device according to Claim 1
**characterized**
**in that** the presetting element (50) has a tool receiving region (51) having a tool receiving opening (52) which is formed such that at room temperature the tool (11) is insertable into the tool receiving opening (52), and is removable therefrom, in a virtually play-free manner, directly or via an intermediate receptacle adapted to receive the tool (11), for example an adapter sleeve connected in between, by way of its shank (12).

3. Device according to Claim 1 or 2,
**characterized**
**in that** the presetting element (50) has a connecting shank (53) which is formed such that the presetting element (50) is insertable into the interface receptacle (36), and is removable therefrom, in a sliding and virtually play-free manner by way of its connecting shank (53).

4. Device according to one of Claims 1 to 3,
**characterized**
**in that** the tool chuck has a connecting shank by way of which the tool chuck is insertable into the interface receptacle (36), and is removable therefrom, in a sliding and virtually play-free manner in exchange for the presetting element (50), and is dimensioned in a manner corresponding to the connecting shank (53) of the presetting element (50).

5. Device according to either of Claims 3 and 4,
**characterized**
**in that** the interface receptacle (36) has a bore (37) which is formed in a cylindrical, frustoconical or similar manner so as to match the external surface (54) of the respective connecting shank (53) formed in a cylindrical, frustoconical or similar manner, or in that the bore (37) and the external surface (54) of the respective connecting shank (53) are configured as steep tapers.

6. Device according to one of Claims 1 to 5,
**characterized**
**in that** the tool chuck has a tool receiving region similar to that (51) of the presetting element (50) with a tool receiving opening which is formed such that at room temperature the tool (11) cannot be inserted into said tool receiving opening by way of its shank (12), but fits in when heated.

7. Device according to one Claims 1 to 6,
**characterized**
**in that** the presetting element (50) or the tool chuck each have a central axial aperture (55) which is open in the receiving direction (30) and towards the respective tool receiving opening (52) and is able to be passed through coaxially by the axial positioning element (33) of the receiving device (30).

8. Device according to one of Claims 1 to 7,
**characterized**
**in that** the positioning element (33) in the receiving device (30) is connected to the setting and holding element (35) therein such that the axial position of the positioning element (33) is settable relative to the receiving device (30) and said positioning element (33) is securable in the set position, and preferably in that the setting and holding element (35) is actuable from the outside by means of an actuator (71).

9. Device according to one of Claims 1 to 8,
**characterized**
**in that** the adjusting sleeve (40) is subjected to a spring force (spring 20) that acts counter to the screwing-in direction.

10. Device according to Claim 1,
**characterized**
**in that** the drive device (70) has a drive sleeve (72) coupled to the adjustment member (46) in the circumferential direction, the adjustment member (46) plunging into said drive sleeve (72) in an axially relatively displaceable manner, and in that the drive device (70) has an external adjusting element (71) which is gear-coupled to the drive sleeve (72) for the rotational adjustment thereof.

11. Device according to Claim 10,
**characterized**
**in that** the external adjusting element (71) and the remaining elements of the drive device (70), and the adjustment member (46) are arranged in the basic body (13), and a holder (80) of the adjusting element (71) acts on the basic body (18) so as to be displaceable in an axially parallel manner and clampable.

12. Device according to one of Claims 9 to 11,
**characterized**
**in that** an externally actuable actuating element (60) that acts on the adjustment member (46) in order to position the latter with regard to the setting and holding element (35) is arranged in the basic body (13), the adjustment member (46) being able to be brought axially into engagement with the adjusting sleeve (40) or out of engagement therewith in the opposite direction thereto by means of said actuating device (60), and preferably in that the actuating device (60) has a transversely directed holder (62) which is coupled to the adjustment member (46) for the axial movement thereof and is held and pretensioned in a spring-elastic manner (spring 61) in the engaging direction.

13. Device according to Claim 12,
**characterized**
**in that** the holder (62) is held on the adjustment member (46) and at a transverse distance therefrom by way of an approximately axially parallel guide pin (63) which is held in a displaceable manner in the basic body (13) and on which an actuable handle (64) acts outside the basic body (13).

14. Device according to one of Claims 1 to 13,
**characterized by**
external releasable fastening means which act on the presetting element (50) and/or on the receiving device (30) and axially fix these with respect to the basic body (13).

15. Device according to one of Claims 1 to 14,
**characterized**
**in that** the presetting element (50) and the tool chuck are formed with an identical structure and differ from one another merely by way of the size of the diameter of the tool receiving opening such that the latter (52) is larger in the presetting element (50) than in the tool chuck and is configured such that at room temperature the tool (11) fits in in a virtually play-free manner, directly or via an adapter sleeve connected in between, by way of its shank (12), while the tool receiving opening in the tool chuck is smaller and is configured such that at room temperature the tool (11) cannot be inserted into said tool receiving opening by way of its shank (12), but fits in only once the tool chuck has been heated.

16. Device according to one or more of the preceding claims,
**characterized**
**in that** in order to form the presetting element (50), provision is made of such a tool chuck which serves both for presetting and for tool fastening by shrink-fit fastening.

17. Device according to Claim 16,
**characterized**
**in that** the tool chuck has a tool receiving region having a conical tool receiving opening for receiving an insert therein, said insert having a cylindrical internal bore for receiving the tool (11) by way of its shank (12) both for the purpose of presetting at room temperature and for fastening by shrink-fit fastening, and also a conical external surface in order to be received in a matching manner in the conical tool receiving opening, and a plurality of longitudinal slots that are arranged in a manner spaced apart from one another in the circumferential direction.

18. Method for setting and fastening a tool (11) in a receptacle in a tool chuck by shrink-fit fastening,
wherein the axial insertion depth of the tool shank (12) in the receptacle of the tool chuck is defined by the setting by means of a positioning element (33), by means of a device according to one or more of the preceding claims,
**characterized**
**in that** a presetting element (50) is inserted by way of a suitable connecting shank (53) into an interface receptacle (36), suitable therefor and for a tool chuck, of a receiving device (30), and the tool (11) is inserted by way of its shank (12) into a tool receiving opening (52) within a tool receiving region (51) of the presetting element (50).

19. Method according to Claim 18,
**characterized**
**in that** a setting and holding element (35) of the positioning element (33) in the receiving device (30) is actuated from the outside such that the positioning element (33) comes into contact with the shank end of the tool (11) and displaces the latter axially until the free end of the tool (11) has reached a predefined desired position, wherein the setting is carried out by means of a vertically adjustable height measuring device with regard to a reference surface on the basic body (13).

20. Method according to either of Claims 18 and 19,
**characterized**
**in that** the presetting element (50) and the tool (11) are removed from the receiving device (30) while the positioning element thereof remains held in the set desired position.

21. Method according to Claim 20,
**characterized**
**in that**, before the presetting element (50) is removed from the receiving device (30), the setting and holding element (35) thereof is decoupled from a drive device (70) that is couplable thereto, with an adjustment capability thereof being cancelled.

22. Method according to one of Claims 18 to 21,
**characterized**
**in that** the receiving device (30) is inserted by way of an inserted tool chuck into a shrink-fitting apparatus.

23. Method according to one of Claims 18 to 22,
**characterized**
**in that** the tool chuck is heated in the shrink-fitting apparatus, at least in the region of the tool receiving region, such that the tool receiving opening thereof is enlarged by thermal expansion to such an extent that the tool (11) fits into the tool receiving opening with its shank (12) and is inserted into said tool receiving opening until the end of the tool shank (12) rests axially against the positioning element (33).

24. Method according to one of Claims 18 to 23,
**characterized**
**in that** the receiving device (30), with the contained tool chuck and the tool (11) contained therein, cools or is cooled by way of gas, or air, or by being plunged into a coolant, such as water, by being sprayed with coolant, or by means of a similar cooling device, and in that the cooled tool chuck is removed with the set, shrink-fitted tool (11) from the interface receptacle (36) of the receiving device (30).

## Revendications

1. Dispositif de réglage et de fixation d'un outil (11) dans un logement d'un mandrin d'outil par fixation par retrait, comprenant un élément de positionnement (33) déplaçable axialement pour prédéfinir la profondeur d'insertion axiale de la queue d'outil (12) dans le logement du mandrin d'outil, un dispositif de réception (30) pouvant être reçu de manière échangeable dans un corps de base (13), lequel dispositif de réception étant le support de l'élément de positionnement (33) et d'un élément de réglage et de retenue (35) pour celui-ci,
**caractérisé en ce que**
le dispositif de réception (30) comprend un logement d'interface (36) pour un élément de pré-réglage (50) ou un mandrin d'outil pouvant être reçu dans celui-ci, et **en ce que** le dispositif de réception (36) comprend une douille centrale (38) présentant un alésage fileté central (39) dans celle-ci, dans lequel alésage fileté une douille d'ajustement (40) dotée d'un filetage extérieur (41) est vissée en tant qu'élément de réglage et de retenue (35), dans laquelle douille d'ajustement l'élément de positionnement (33) est inséré, lequel est centré et supporté axialement dans celle-ci, et **en ce que** la douille d'ajustement (40) comprend un canal ouvert axialement (44) présentant un engagement en rotation (45), dans lequel, en vue du réglage en rotation, un organe de réglage (46) comprenant un moyen de rotation approprié (47) peut venir en prise, l'organe de réglage (46) pouvant être actionné de manière rotative au niveau de la région d'extrémité opposée à l'élément de réglage et de retenue (35), au moyen d'un dispositif d'entraînement (70) y agissant.

2. Dispositif selon la revendication 1,
**caractérisé en ce que**
l'élément de pré-réglage (50) comprend une région de réception d'outil (51) dotée d'une ouverture de réception d'outil (52) qui est configurée de telle sorte qu'à température ambiante, l'outil (11) puisse être, par sa queue (12), inséré pratiquement sans jeu dans l'ouverture de réception d'outil (52), et puisse en être retiré, directement ou par le biais d'un logement intermédiaire adapté au logement de l'outil (11), par exemple une douille de réduction interposée.

3. Dispositif selon la revendication 1 ou 2,
**caractérisé en ce que**
l'élément de pré-réglage (50) comprend une tige de liaison (53) qui est configurée de telle sorte que l'élément de pré-réglage (50) puisse être inséré, par sa tige de liaison (53), dans le logement d'interface (36), et puisse en être retiré, de manière glissante et pratiquement sans jeu.

4. Dispositif selon l'une quelconque des revendications 1 à 3,
**caractérisé en ce que**
le mandrin d'outil comprend une tige de liaison, par laquelle le mandrin d'outil peut être inséré dans le logement d'interface (36), et en être retiré, de manière glissante et pratiquement sans jeu, en échange de l'élément de pré-réglage (50), et laquelle est dimensionnée de manière correspondante à la tige de liaison (53) de l'élément de pré-réglage (50).

5. Dispositif selon l'une quelconque des revendications 3 et 4,
**caractérisé en ce que**
le logement d'interface (36) comprend un alésage (37) qui est formé de manière cylindrique, tronconique ou similaire de manière à s'adapter à la surface extérieure (54) de la tige de liaison (53) formée respectivement de manière cylindrique, tronconique ou similaire, ou **en ce que** l'alésage (37) ainsi que la surface extérieure (54) de la tige de liaison respective (53) sont réalisés sous forme de cône à forte conicité.

6. Dispositif selon l'une quelconque des revendications 1 à 5,
**caractérisé en ce que**
le mandrin d'outil comprend une région de réception d'outil analogue à celle (51) de l'élément de pré-réglage (50) avec une ouverture de réception d'outil dans celle-ci, laquelle ouverture de réception d'outil est configurée de telle sorte qu'à température ambiante, l'outil (11) ne puisse pas être inséré par sa queue (12) dans celle-ci, mais y rentre en cas de chauffage.

7. Dispositif selon l'une quelconque des revendications 1 à 6,
**caractérisé en ce que**
l'élément de pré-réglage (50) ou le mandrin d'outil comprend respectivement un passage axial central (55) qui est ouvert vers le dispositif de réception (30) ainsi que vers l'ouverture de réception d'outil (52) respective et qui peut être traversé de manière coaxiale par l'élément de positionnement axial (33) du dispositif de réception (30).

8. Dispositif selon l'une quelconque des revendications 1 à 7,
**caractérisé en ce que**
l'élément de positionnement (33) dans le dispositif de réception (30) est relié à l'élément de réglage et de retenue (35) qui s'y trouve, de telle sorte que la position axiale de l'élément de positionnement (33) puisse être réglée par rapport au dispositif de réception (30) et que l'élément de positionnement puisse être retenu dans la position réglée, et de préférence **en ce que** l'élément de réglage et de retenue (35) peut être actionné depuis l'extérieur au moyen d'un actionneur (71).

9. Dispositif selon l'une quelconque des revendications 1 à 8,
**caractérisé en ce que**
la douille d'ajustement (40) est sollicitée par une force de ressort (ressort 20) agissant en sens inverse au sens de vissage.

10. Dispositif selon la revendication 1,
**caractérisé en ce que**
le dispositif d'entraînement (70) comprend une douille d'entraînement (72) accouplée à l'organe de réglage (46) dans la direction périphérique, dans laquelle douille d'entraînement l'organe de réglage (46) plonge de manière relativement axialement déplaçable, et **en ce que** le dispositif d'entraînement (70) comprend un élément d'ajustement extérieur (71) qui est accouplé par engrènement à la douille d'entraînement (72) en vue de son réglage en rotation.

11. Dispositif selon la revendication 10,
**caractérisé en ce que**
l'élément d'ajustement extérieur (71) et les éléments restants du dispositif d'entraînement (70) et l'organe de réglage (46) sont disposés dans le corps de base (13) et un support (80) de l'élément d'ajustement (71) agit sur le corps de base (18) de manière déplaçable de façon axialement parallèle et de manière serrable.

12. Dispositif selon l'une quelconque des revendications 9 à 11,
**caractérisé en ce**
**qu'**un dispositif d'actionnement (60) pouvant être actionné depuis l'extérieur et agissant sur l'organe de réglage (46) en vue de son positionnement par rapport à l'élément de réglage et de retenue (35) est disposé dans le corps de base (13), au moyen duquel dispositif d'actionnement l'organe de réglage (46) peut être amené axialement en prise avec la douille d'ajustement (40) ou peut être amené hors de prise avec celle-ci en sens inverse, et en ce que le dispositif d'actionnement (60) comprend de préférence un support (62) orienté transversalement, lequel est accouplé à l'organe de réglage (46) en vue de son déplacement axial et est précontraint et retenu de manière élastique (ressort 61) dans le sens de prise.

13. Dispositif selon la revendication 12,
**caractérisé en ce que**
le support (62) est retenu sur l'organe de réglage (46) et à une certaine distance transversale de celui-ci, sur un boulon de guidage (63) approximativement axialement parallèle, lequel est retenu de manière déplaçable dans le corps de base (13) et sur lequel agit une poignée (64) pouvant être actionnée à l'extérieur du corps de base (13).

14. Dispositif selon l'une quelconque des revendications 1 à 13,
**caractérisé par**
des moyens de fixation amovibles extérieurs qui agissent sur l'élément de pré-réglage (50) et/ou sur le dispositif de réception (30) et fixent axialement ceux-ci par rapport au corps de base (13).

15. Dispositif selon l'une quelconque des revendications 1 à 14,
**caractérisé en ce que**
l'élément de pré-réglage (50) et le mandrin d'outil sont configurés de manière à présenter une construction identique et diffèrent l'un de l'autre seulement par la dimension du diamètre de l'ouverture de réception d'outil, de telle sorte que celle-ci (52) soit plus grande dans le cas de l'élément de pré-réglage (50) que dans le cas du mandrin d'outil et réalisée de telle sorte qu'à température ambiante, l'outil (11) rentre, par sa queue (12), pratiquement sans jeu, directement ou par le biais d'une douille de réduction interposée, tandis que l'ouverture de réception d'outil du mandrin d'outil est plus petite et réalisée de telle sorte qu'à température ambiante, l'outil (11) ne puisse pas y être inséré par sa queue (12), mais ne rentre que lorsque le mandrin d'outil est chauffé.

16. Dispositif selon l'une quelconque ou plusieurs des revendications précédentes,
**caractérisé en ce que**,
pour former l'élément de pré-réglage (50), il est prévu un mandrin d'outil qui est tel qu'il serve à la fois au pré-réglage et à la fixation par retrait de l'outil.

17. Dispositif selon la revendication 16,
**caractérisé en ce que**
le mandrin d'outil comprend une région de réception d'outil dotée d'une ouverture de réception d'outil conique pour y recevoir un insert, lequel insert comprend un alésage intérieur cylindrique pour recevoir l'outil (11) par sa queue (12) tant à température ambiante pour le pré-réglage que pour la fixation par retrait, ainsi qu'une surface extérieure conique pour la réception appropriée dans l'ouverture de réception d'outil conique et plusieurs fentes longitudinales disposées à distance les unes des autres dans la direction périphérique.

18. Procédé de réglage et de fixation d'un outil (11) dans un logement d'un mandrin d'outil par fixation par retrait,
dans lequel la profondeur d'insertion axiale de la queue d'outil (12) dans le logement du mandrin d'outil est prédéfinie par le réglage au moyen d'un élément de positionnement (33), au moyen d'un dispositif selon l'une quelconque ou plusieurs des revendications précédentes,
**caractérisé en ce**
**qu'**un élément de pré-réglage (50) est inséré par une tige de liaison appropriée (53) dans un logement d'interface (36), approprié pour celle-ci ainsi que pour un mandrin d'outil, d'un dispositif de réception (30), et l'outil (11) est inséré par sa queue (12) dans une ouverture de réception d'outil (52) à l'intérieur d'une région de réception d'outil (51) de l'élément de pré-réglage (50).

19. Procédé selon la revendication 18,
**caractérisé en ce**
**qu'**un élément de réglage et de retenue (35) de l'élément de positionnement (33) dans le dispositif de réception (30) est actionné depuis l'extérieur, de telle sorte que l'élément de positionnement (33) entre en contact avec l'extrémité de queue de l'outil (11) et déplace celle-ci axialement jusqu'à ce que l'extrémité libre de l'outil (11) ait atteint une position de consigne prédéfinie, le réglage étant effectué au moyen d'un dispositif de mesure de hauteur pouvant être ajusté en hauteur, par rapport à une surface de référence sur le corps de base (13).

20. Procédé selon la revendication 18 ou 19,
**caractérisé en ce que**
l'élément de pré-réglage (50) et l'outil (11) sont retirés du dispositif de réception (30), tandis que leur élément de positionnement demeure retenu dans la position de consigne réglée.

21. Procédé selon la revendication 20,
**caractérisé en ce**
**qu'**avant le retrait de l'élément de pré-réglage (50) du dispositif de réception (30), son élément de réglage et de retenue (35) est désaccouplé d'un dispositif d'entraînement (70) pouvant être accouplé à celui-ci, en supprimant une possibilité d'ajustement au moyen de celui-ci.

22. Procédé selon l'une quelconque des revendications 18 à 21,
**caractérisé en ce que**
le dispositif de réception (30) est inséré, par le mandrin d'outil inséré, dans un appareil de retrait.

23. Procédé selon l'une quelconque des revendications 18 à 22,
**caractérisé en ce que**
le mandrin d'outil est chauffé dans l'appareil de retrait au moins dans la région de la région de réception d'outil, de telle sorte que son ouverture de réception d'outil soit agrandie par dilatation thermique jusqu'à ce que l'outil (11) rentre, par sa queue (12), dans l'ouverture de réception d'outil et qu'il soit inséré dans celle-ci jusqu'à ce que la queue d'outil (12) repose axialement du côté de son extrémité sur l'élément de positionnement (33).

24. Procédé selon l'une quelconque des revendications 18 à 23,
**caractérisé en ce que**
le dispositif de réception (30), avec le mandrin d'outil compris et avec l'outil (11) compris dans celui-ci, refroidit ou est refroidi par du gaz, ou par de l'air, ou en étant plongé dans un réfrigérant, tel que de l'eau, par pulvérisation de réfrigérant, ou au moyen d'un dispositif de refroidissement similaire, et **en ce que** le mandrin d'outil refroidi est retiré, avec l'outil (11) réglé et rétracté, du logement d'interface (36) du dispositif de réception (30).
